# EUROPÄISCHE PATENTSCHRIFT

(11) **EP 2 885 863 B1**
(45) Veröffentlichungstag und Bekanntmachung des Hinweises auf die Patenterteilung: **28.08.2019**
(21) Anmeldenummer: 13774630.1
(22) Anmeldetag: 27.09.2013
(51) Int. Cl.: H02M 3/335, H05B 41/40, H05B 33/08

(54) **GETAKTETER SPANNUNGSWANDLER**
SWITCHED VOLTAGE CONVERTER
CONVERTISSEUR DE TENSION À DÉCOUPAGE

(30) Priorität: 28.09.2012 DE 102012217732
(43) Veröffentlichungstag der Anmeldung: 24.06.2015
(73) Patentinhaber: Siemens Mobility GmbH, 81739 München (DE)
(72) Erfinder: EUE, Wolfgang, 38162 Cremlingen (DE); OKYERE, Philip Fosu, 38100 Braunschweig (DE)
(86) Internationale Anmeldenummer: PCT/EP2013/070190
(87) Internationale Veröffentlichungsnummer: WO 2014/049120

(56) Entgegenhaltungen:
- DE-A1- 10 216 784
- US-A1- 2004 125 620
- US-A1- 2005 001 600
- US-A1- 2010 013 322
- BO YANG ET AL: "LLC resonant converter for front end DC/DC conversion", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, Bd. 2, 10. März 2002 (2002-03-10), Seiten 1108-1112, XP010583055, ISBN: 978-0-7803-7404-1

## Beschreibung

Die Erfindung betrifft einen getakteten Spannungswandler mit galvanischer Trennung und geregelter Einstellung einer Ausgangsspannung aus einer Eingangsspannung auf einen aus einer Anzahl von Sollwerten vorgebbaren Sollwert mittels einer PWM-Einrichtung.

Ein getakteter Spannungswandler, der eine am Eingang zugeführte Gleichspannung in eine Gleichspannung mit höherem, niedrigerem oder invertiertem Spannungsniveau umwandelt, wird auch als Gleichspannungswandler (DC-DC-Wandler) bezeichnet. Die Spannungsumsetzung erfolgt mittels mindestens eines mit einer bestimmten Schalt- oder Arbeitsfrequenz angesteuerten elektronischen Halbleiterschalters und mindestens eines Wandler-Transformators zur Energieübertragung sowie mindestens einer Gleichrichterdiode zur Auskopplung der Ausgangsgleichspannung.

Der Transformator im Spannungswandler kann als Energiespeicher eines sogenannten Sperrwandlers mit galvanischer Trennung zwischen dem Wandlereingang und dem Wandlerausgang arbeiten. Während der sogenannten Leitphase ist der Halbleiterschalter geschlossen und der Strom fließt bei gesperrter sekundärseitiger Diode über die Primärwicklung des Transformators. In dieser Leitphase erfolgt keine Energieübertragung und die Sekundärwicklung des Transformators ist stromlos, während sich ein magnetisches Feld aufbaut. Ein sekundärseitiger, zum Wandlerausgang parallel geschalteter Kondensator hält die Ausgangsspannung während dieser Leitphase. Wird der Halbleiterschalter gesteuert geöffnet, so sinkt der primärseitige Strom zu null und der sekundärseitig zunehmende Strom fließt durch die Diode und lädt den Kondensator auf die Ausgangsspannung auf. Dieser Sekundärstrom nimmt mit abnehmender Energie in der Sekundärwicklung des Transformators bis auf null ab. Je nach Belastung des Sperrwandlers wird der Halbleiterschalter daraufhin entweder unmittelbar anschließend erneut gesteuert geschlossen (Volllast) oder später geschlossen (Teillast). Diese Zyklen aus Leit- und Sperrphase werden durch entsprechende Ansteuerung des Halbleiterschalters eingestellt.

Der Transformator im Spannungswandler kann ebenso als galvanisch trennendes Bauteil eines sogenannten Flusswandlers arbeiten. In dieser Variante erfolgt während der sogenannten Leitphase des eingangsseitigen Halbleiterschalters die Auskopplung des transformatorisch übertragenen Stroms durch die sekundärseitige Diode. In dieser Variante muss ebenso der Halbleiterschalter regelmäßig gesteuert geöffnet werden, damit sich das magnetische Feld im Transformator abbauen kann.

In komplexeren Varianten von Flusswandlern werden eingangsseitig mehrere Halbleiterschalter eingesetzt, um den Transformator in einer Brückenschaltung (Halb- oder Vollbrücken-Flusswandler) zu betreiben. Diese komplexeren Varianten verwenden oftmals Transformatoren mit mehr als zwei Wicklungen oder Wicklungen mit Zwischenabgriffen und erfordern ausgangsseitig mehrere Gleichrichterdioden. Bei den genannten Wandlertypen handelt sich um geläufige Aufbauvarianten von Gleichspannungswandlern (DC-DC-Wandlern).

Um Eingangsspannungs- und/oder Laständerungen auszuregeln, kann eine Regelung unter Verwendung eines Optokopplers in der auch als Feedback-Schleife bezeichneten Regelschleife zur Aufrechterhaltung der Potentialtrennung eingesetzt werden. Der Optokoppler gibt bei einer Sollwertabweichung ein digitales Steuersignal an eine Einrichtung zur Pulsweitenmodulation ab, die daraufhin den Tastgrad (duty cycle) des Steuersignals (PWM-Signal) für den Halbleiterschalter des Spannungswandlers zur Nachführung der Ausgangsspannung auf den Sollwert ändert bzw. einstellt.

Insbesondere in der Signaltechnik für Schienenfahrzeuge werden zur Ansteuerung der Signalleuchten mindestens zwei umschaltbare Ausgangsspannungen gefordert, insbesondere um zwei unterschiedliche Helligkeitsstufen für Tages- und Nachtbetrieb der Signalleuchten bereitzustellen. Eine schaltungstechnische Realisierung mittels getakteter Spannungswandler ist unter Verwendung eng tolerierter Optokoppler kostenintensiv oder bei kostengünstigen, vergleichsweise toleranzbehafteten und somit unpräzisen Optokopplern schaltungstechnisch sehr aufwändig.

Der Erfindung liegt die Aufgabe zugrunde, einen in besonders einfacher Art und Weise zur Einstellung einer Ausgangsspannung auf einen aus einer Anzahl von Sollwerten vorgebbaren Sollwert ertüchtigten getakteten Spannungswandler anzugeben.

Insbesondere soll der Spannungswandler auch für die Verwendung eines Optokopplers mit derart weiten Toleranzen ertüchtigt werden, der faktisch nur die beiden Extremwertinformationen "Ist-Spannung zu hoch/niedrig" übertragen kann, um Aufbauvarianten von DC-DC-Wandlern mit PWM-Einrichtungen, für die ein Steuersignal mit den beiden binären Extremwertinformationen "Ist-Spannung zu hoch" und "Ist-Spannung zu niedrig" nach Art einer Zweipunktregelung ausreichend ist, zu verbessern.

Diese Aufgabe wird erfindungsgemäß gelöst durch die Merkmale des Anspruchs 1. Vorteilhafte Ausgestaltungen und Weiterbildungen sind Gegenstand der Unteransprüche.

Hierzu ist ein geregelt getakteter Spannungswandler mit galvanischer Trennung vorgesehen, der eingangsseitig einen mittels eines Pulsweitenmodulators (PWM-Einrichtung) gesteuerten Halbleiterschalter und ausgangsseitig einen Gleichrichter aufweist. Eine Regelung und/oder Steuerung umfasst dabei eine frequenzgesteuerte Sollwertumschaltung, die in Abhängigkeit von einer Umschaltung einer einstellbaren Arbeitsfrequenz der PWM-Einrichtung von einer ersten Frequenz, der ein erster der Sollwerte zugeordnet ist, auf eine zweite Frequenz, der ein aktuell ausgewählter zweiter der Sollwerte zugeordnet ist, ein Teilungsverhältnis eines mit der eingestellten Ausgangsspannung beaufschlagten Spannungsteilers umschaltet. Ein Soll-Ist-Vergleicher der Regelung bzw. Steuerung generiert aus einer Abweichung eines von dem Teilungsverhältnis bestimmten Spannungswertes von einem Referenzwert einer Referenzspannung ein Steuersignal und führt dieses der PWM-Einrichtung zur Einstellung der Ausgangsspannung auf den der aktuell eingestellten Frequenz der PWM-Einrichtung zugeordneten Sollwert zu.

In einer vorteilhaften Ausgestaltung ist der Soll-Ist-Vergleicher innerhalb des Regelkreises oder dessen sogenannter Feedback-Schleife der frequenzgesteuerten Sollwertumschaltung nachgeschaltet. Der Soll-Ist-Vergleicher gibt das Steuersignal zur Einstellung der Ausgangsspannung auf den von der jeweiligen Frequenz der Arbeitsfrequenz abhängigen Sollwert, vorzugsweise galvanisch getrennt und somit von der Ausgangsspannung des Spannungswandlers potentialgetrennt, aus.

Zur Aufrechterhaltung der Potentialtrennung des getakteten Spannungswandlers innerhalb der Feedback-Schleife ist dort ein solcher Optokoppler eingesetzt, der ein von der jeweiligen Ausgangsspannung galvanisch getrenntes Steuersignal für die PWM-Einrichtung bildet.

Gemäß einer zweckmäßigen Schaltungsausführung der frequenzgesteuerten Sollwertumschaltung umfasst diese mindestens einen Frequenzfilter, der vorzugsweise als Bandpass ausgeführt ist. Der jeweilige Bandpass initiiert anhand von Spannungssprüngen, Spannungsänderungen oder Wechselspannungsanteilen der noch nicht gleichgerichteten Ausgangsspannung die Umschaltung des Teilungsverhältnisses und damit die Regelung der Ausgangsspannung vom ersten Sollwert auf den zweiten Sollwert oder umgekehrt. Hierzu ist der oder jeder Bandpass geeigneterweise eingangsseitig mit einem ausgangsseitigen Abgriff des Spannungswandlers vor dessen Gleichrichter oder mit einem Zwischenabgriff einer ausgangsseitigen Wicklung des Transformators oder mit einer Hilfswicklung des Transformators verbunden.

In schaltungstechnisch einfach und zuverlässig realisierbarer Weise steuert der jeweilige Bandpass oder Frequenzfilter ausgangsseitig einen Schalter, insbesondere einen Transistor, in Abhängigkeit von der jeweils abgegriffenen Frequenz der Arbeitsfrequenz. Die Ansteuerung erfolgt dabei derart, dass die Regelung bzw. Steuerung die Ausgangsspannung auf den der jeweils aktuell ausgewählten Frequenz der Arbeitsfrequenz zugeordneten Sollwert einstellt bzw. ausregelt. Der steuerbare Schalter kann dabei in einfacher Art und Weise mit einem ohmschen Widerstand beschaltet sein. Hierdurch ist in wiederum einfacher und zuverlässiger Art eine Änderung des Teilungsverhältnisses des Spannungsteilers ermöglicht, der den an den Soll-Ist-Vergleicher heranzuführenden Spannungswert liefert.

Auch können mehrere Bandpässe der frequenzgesteuerten Sollwertumschaltung der Wandlerregelung miteinander mittels eines sogenannten wired-AND oder einem UND-Gatter logisch verknüpft sein. In dieser Ausführungsform ist den Bandpässen ausgangsseitig vorzugsweise jeweils ein Kondensator zugeordnet. Auch kann den Bandpässen ein Dekoder zugeordnet sein, der - ebenso wie eine logische Verknüpfung der Bandpässe - die Einstellung von Spannungs-Sollwerten ermöglicht, die festen Frequenzen der Arbeitsfrequenz zugeordnet sind. Der Einsatz eines solchen Dekoders, insbesondere eines sogenannten 1-aus-n-Dekoders ermöglicht zudem die Einstellung von Spannungs-Sollwerten, die frei wählbaren Frequenzen der Arbeitsfrequenz zugeordnet sind oder zugeordnet werden können.

Diese vorteilhafte Weiterbildung der frequenzgesteuerten Sollwertumschaltung ermöglicht sowohl eine Frequenzumschaltung als auch, praktisch integriert, eine Frequenzmodulation, was wiederum die stabile Ausregelung der Ausgangsspannung auf einen Sollwert, der aus einer Mehrzahl von Sollwerten auswählbar ist, ermöglicht.

In vorteilhafter Ausgestaltung des Soll-Ist-Vergleichers umfasst dieser einen Operationsverstärker, der auch zu einem Differenzverstärker erweitert und entsprechend beschaltet sein kann. Dem Operationsverstärker werden eingangsseitig der Referenzwert der Referenzspannung und der mittels der frequenzgesteuerten Sollwertumschaltung veränderbare Spannungswert zugeführt. Abhängig von der jeweiligen Abweichung des Spannungswertes von dem Referenzwert der Referenzspannung gibt der Operationsverstärker ausgangsseitig das Steuersignal aus, dessen Signalwert oder -pegel von der jeweiligen Regelababweichung der aktuell eingestellten Ausgangsspannung des Spannungswandlers abhängig ist.

In einer geeigneten Weiterbildungen des Soll-Ist-Vergleichers umfasst dieser einen bzw. den oben erwähnten Spannungsteiler, der mit dem Wandlerausgang verbunden und zur Bereitstellung des Spannungswertes über einen Teilungsabgriff an einen Eingang des Operationsverstärkers geführt ist. Der andere Eingang des Operationsverstärkers ist mit einem Referenzwertgeber, insbesondere mit einer Durchbruchs- oder Zenerdiode, zur Bereitstellung des Referenzwertes der Referenzspannung beschaltet.

Der dem getakteten Spannungswandler zugeordnete Transformator realisiert die gewünschte oder geforderte galvanische Trennung und/oder Potentialtrennung der jeweiligen Ausgangsspannung von der Eingangsspannung. Die jeweilige Ausgangsspannung ist zweckmäßigerweise an einem dem Gleichrichter nachgeordneten und zum Ausgang des Spannungswandlers parallel geschalteten Kondensator bereitgestellt und abgreifbar.

Die mit der Erfindung erzielten Vorteile bestehen insbesondere darin, dass mittels eines getakteten Spannungswandlers, der eine zweckmäßigerweise einem Soll-Ist-Vergleicher vorgeschaltete frequenzgesteuerte Sollwertumschaltung aufweist, eine geregelte Einstellung einer Ausgangsspannung auf einen aus einer Anzahl von Sollwerten vorgebbaren Sollwert ermöglicht ist. Die frequenzgesteuerte Sollwertumschaltung kann in Abhängigkeit von einer Umschaltung einer einstellbaren Schalt- oder Arbeitsfrequenzen der PWM-Einrichtung zwischen ausgewählten Frequenzen, denen entsprechende unterschiedliche Spannungs-Sollwerte zugeordnet sind, zwischen unterschiedlichen Teilungsverhältnissen eines mit der Ausgangsspannung beaufschlagten Spannungsteilers umschalten.

Die Regelung bzw. deren Soll-Ist-Vergleicher generiert aus einer Abweichung eines von dem Teilungsverhältnis bestimmten Spannungswertes von einem Referenzwert einer Referenzspannung ein Steuersignal, das der PWM-Einrichtung über einen Optokoppler zur Einstellung der Ausgangsspannung auf den der aktuell eingestellten Frequenz zugeordneten Sollwert zugeführt wird.

Die Regelung der Ausgangsspannung auf den jeweiligen, aktuell vorgegebenen Sollwert wird dabei mittels des getakteten Spannungswandlers praktisch ausschließlich durch eine Änderung der Pulsbreite, d.h. der Einschaltzeit des Halbleiterschalters (Hauptschalttransistor) des getakteten Spannungswandlers durchgeführt.

Nachfolgend werden Ausführungsbeispiele der Erfindung anhand einer Zeichnung näher erläutert. Darin zeigen:
- FIG 1: einen Schaltplan eines getakteten Spannungswandlers mit einer frequenzgesteuerten Sollwertumschaltung einer Regelungsschaltung mit Optokoppler,
- FIG 2: eine Ausführungsform der frequenzgesteuerten Sollwertumschaltung für eine Anzahl von Ausgangsspannungen,
- FIG 3: eine erste Variante der frequenzgesteuerten Sollwertumschaltung durch Frequenzmodulation, und
- FIG 4: eine weitere Variante der frequenzgesteuerten Sollwertumschaltung mit einem Dekoder zur Erzeugung mehrerer frei wählbarer Ausgangsspannungen durch Frequenzumschaltung und Frequenzmodulation.

Einander entsprechende Teile sind in allen Figuren mit den gleichen Bezugszeichen versehen.

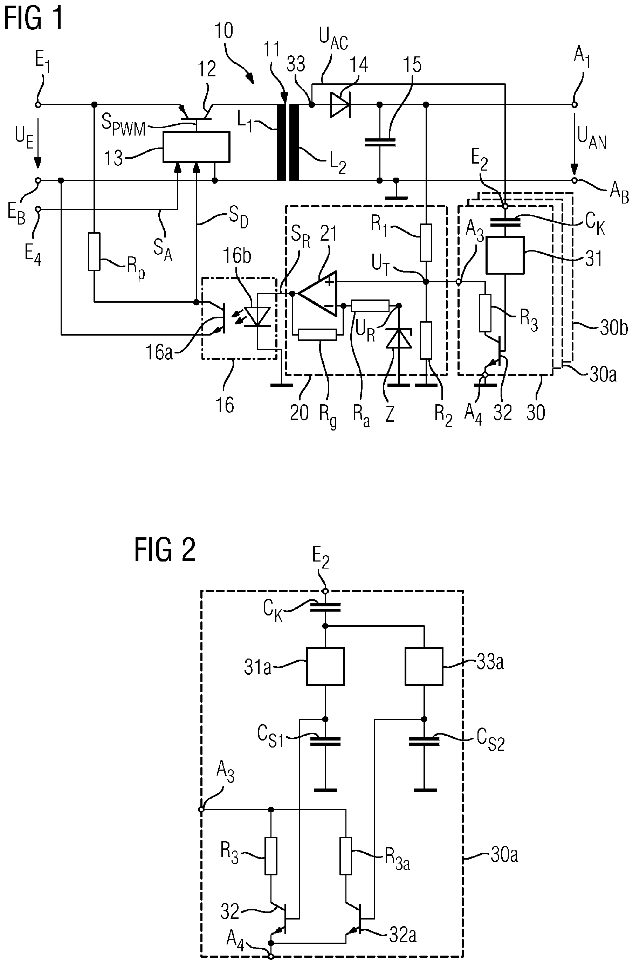

FIG 1 zeigt eine Schaltung eines geregelt getakteten Spannungswandlers 10 mit einem Eingang E₁ für eine Eingangsspannung U_{E} und hiervon potentialgetrenntem (galvanisch getrenntem) Ausgang A₁ für eine Anzahl von Ausgangsspannungen U_{An}· Der als Gleichspannungswandler arbeitende getaktete Spannungswandler 10 weist eingangsseitig sowie primärseitig eines Transformators 11 mit einer Primärwicklung L₁ und einer Sekundärwicklung L₂ einen nachfolgend als Schalttransistor bezeichneten Halbleiterschalter 12 auf. Der Schalttransistor 12 wird von einem nachfolgend als PWM-Einrichtung bezeichneten Pulsweitenmodulator 13 angesteuert.

Der dem Schalttransistor 12 nachgeordnete Transformator 11 bewirkt eine Spannungsumsetzung und eine Potentialtrennung zwischen dem Eingang E₁ und dem Ausgang A₁ des Spannungswandlers 10. An die sekundärseitige Wicklung oder Spule L₂ des Transformators 11 und damit ausgangsseitig des Spannungswandlers 10 sind ein Gleichrichter 14 in Form einer seriellen Diode und ein parallel geschalteter Kondensator 15 zur Glättung der von der Diode 14 erzeugten gepulsten oder pulsierenden Gleichspannung angeschlossen. Die am Kondensator 15 abfallende Spannung bildet die Ausgangsspannung U_{An} des Spannungswandlers 10.

Zur Steuerung der PWM-Einrichtung 13 und damit zur Regelung der jeweiligen Ausgangsspannung U_{An} des Spannungswandlers 10 dient ein im Wesentlichen binäres Steuersignal S_{D}, das der PWM-Einrichtung 13 von einem Optokoppler 16 zugeführt ist. Damit aus dem durchgeschalteten oder gesperrten Fototransistor 16a des Optokopplers 16 das Steuersignal S_{D} gebildet werden kann, ist kollektorseitig ein ohmscher Widerstand Rₚ an beispielweise den Eingang E₁ des Spannungswandlers 10 geschaltet, und emitterseitig ist der Fototransistor 16a mit dem Eingangsbezugspotential E_{B} des Spannungswandlers 10 verbunden.

Das Steuersignal S_{D} bewirkt eine Einstellung des Tastgrades (duty cycle) d eines dem Schalttransistor 12 von der PWM-Einrichtung 13 zugeführten Steuersignals S_{PWM}. Durch entsprechend geregelt- oder gesteuertes Ein- und Ausschalten des Schalttransistors 12 wird die Ausgangsspannung U_{An} eingestellt bzw. geregelt. Durch Veränderung des Tastgrades d wird die Einschaltdauer t_{E} und die Ausschaltdauer t_{A} des Schalttransistors 12, mit d = t_{E}/(t_{E} + t_{A}), derart variiert, dass sich die vorgegebene Ausgangsspannung U_{An} möglichst stabil einstellt. In Abhängigkeit vom Steuersignal S_{D} wird somit die Ausgangsspannung U_{An} bedarfsweise erhöht oder erniedrigt.

Die Einstellung der Ausgangsspannung U_{An} erfolgt mittels einer Regelung mit einem Soll-Ist-Vergleicher 20, die dem Optokoppler 16 vorgeschaltet ist. Eine Leuchtdiode 16b des Optokopplers 16 ist mit dem Ausgang eines Operationsverstärkers 21 des Soll-Ist-Vergleichers 20 verbunden. Das vom Soll-Ist-Vergleicher 20 ausgangsseitig des Operationsverstärkers 21 erzeugte Steuer- oder Regelsignal S_{R} kann einen hohen oder einen niedrigen Signalpegel annehmen, der ein Aufleuchten oder Abdunkeln der Leuchtdiode 16b des Optokopplers 16 bewirkt. Dessen, vom Soll-Ist-Vergleicher 20 galvanisch getrenntes, ausgangsseitiges Steuersignal S_{D} stellt für die PWM-Einrichtung 13 einen hohen oder niedrigen Signalpegel bereit. Dass sich entsprechend der symbolischen Darstellung in FIG 1 das Steuersignal S_{D} logisch invertiert zum Steuer- oder Regelsignal S_{R} verhält, ist unwesentlich und wird in der PWM-Einrichtung 13 beim geregelten Verändern des Tastgrades d berücksichtigt.

Der Soll-Ist-Vergleicher 20 umfasst zusätzlich zum Operationsverstärker 21 einen Spannungsteiler mit zwei ohmschen Widerständen R1 und R2 sowie einen Referenzwertgeber Z, vorliegend in Form einer Zenerdiode bzw. Referenzdiode. Der Spannungsteiler ist zwischen den Ausgang A₁ und ausgangsseitige Masse oder Ausgangsbezugspotential A_{B} des Spannungswandlers 10 angeschlossen und somit mit der Ausgangsspannung U_{An} beaufschlagt. Das Teilungsverhältnis des Spannungsteilers R1, R2 bestimmt die Spannung am nicht-invertierenden Eingang oder Pluseingang (+) des Operationsverstärkers 21. Der invertierende Eingang oder Minuseingang (-) des Operationsverstärkers 21 ist am Referenzwertgeber Z angeschlossen und somit mit der Referenzspannung U_{R} beaufschlagt. In Abhängigkeit von der Spannungsdifferenz zwischen dem Pluseingang (+) und dem Minuseingang (-) des Operationsverstärkers 21 wird ein binäres Ausgangssignal in Form eines High-Pegels oder eines Low-Pegels als Steuersignal S_{R} erzeugt und in den Optokoppler 16 eingespeist.

Der Optokoppler 16, der Widerstand Rₚ und der Soll-Ist-Vergleicher 20 werden nachfolgend auch als Feedback-Schleife im Regelkreis des Spannungswandlers 10 bezeichnet. In diese Feedback-Schleife des Spannungswandlers 10 ist eine frequenzgesteuerte Sollwertumschaltung 30 eingefügt. Die frequenzgesteuerte Sollwertumschaltung 30 weist einen Frequenzfilter 31 auf, insbesondere in Form eines Bandpasses, dem ein Koppelkondensator Cₖ vorgeordnet und ein Halbleiterschalter 32, insbesondere in Form eines Transistors, nachgeschaltet ist. Der Transistor 32 ist kollektorseitig über einen nachfolgend auch als Justagewiderstand bezeichneten ohmschen Widerstand R3 an einen Ausgang A₃ und emitterseitig, beispielsweise über einen weiteren Ausgang A₄, an ausgangsseitige Masse oder Ausgangsbezugspotential A_{B} geführt. Der Ausgang A₃ kann mit einem korrespondierenden Eingang des Soll-Ist-Vergleichers 20 verbunden sein, der seinerseits zwischen den Widerständen R1 und R2 an den durch diesen gebildeten Spannungsteiler führt. Die Anschlussverbindung des Widerstandes R3 des frequenzgesteuerten Sollwertumschalters 30 zum Spannungsteiler R1, R2 des Soll-Ist-Vergleichers 20 kann auch schaltungstechnisch direkt realisiert sein. Der Ausgang A₄ bildet somit den Masseanschluss der frequenzgesteuerten Sollwertumschaltung 30.

Der Koppelkondensator Cₖ ist über einen Eingang E₂ der frequenzgesteuerten Sollwertumschaltung 30 an die Sekundärseite des Transformators 11 des Spannungswandlers 10 und dort zwischen der Sekundärspule L₂ und dem Gleichrichter bzw. der Diode 14 an einen Abgriff 33 geführt. Mittels des Koppelkondensators Cₖ der frequenzgesteuerten Sollwertumschaltung 30 können somit Spannungssprünge oder -änderungen, nachfolgend auch Wechselspannungswerte U_{AC} genannt, vor der Gleichrichtung mittels des Gleichrichters 14 abgegriffen und der frequenzgesteuerten Sollwertumschaltung 30 zugeführt werden. Die Frequenz der vor der Gleichrichtung abgegriffenen Spannungsänderungen oder -sprünge korrespondiert mit der Schaltfrequenz des Schalttransistors 12 und somit mit der jeweiligen Arbeitsfrequenz fₐₙ des getakteten Spannungswandlers 10.

Wird beispielsweise ein nachfolgend auch als Sollwert oder Spannungswert bezeichneter Spannungs-Sollwert U_{A1} der Ausgangsspannung U_{An} in Höhe von beispielsweise 10V (U_{A1} = 10V) eingestellt oder ausgewählt, so stellt sich der getaktete Spannungswandler 10 auf eine Arbeitsfrequenz von beispielsweise fₐ₁ = 50kHz ein. Diese Frequenz fₐ₁ ist auch an der Ausgangsseite des Spannungswandlers 10 am Abgriff 33 feststellbar und wird über den Koppelkondensator Cₖ ausgekoppelt sowie dem Bandpass 31 zugeführt. Der Bandpass 31 ist für diese Frequenz undurchlässig und steuert somit den Transistors 32 nicht durch.

Die Vorgabe des Spannungswertes U_{A1} = 10V erfolgt mittels eines Auswahlsignals S_{A}, das der PWM-Einrichtung 13 über einen Eingang E₄ des getakteten Spannungswandlers 10 zugeführt wird. Da das Auswahlsignal S_{A} für die Ausgangsspannungen U_{An} dem eingangsseitigen Potential des getakteten Spannungswandlers 10 zugehörig und nur eingangsseitig verfügbar ist, ist die Übertragung des Auswahlsignals S_{A} über die galvanische Trennung hinweg durch Hinzufügen überbrückender Bauteile nicht möglich.

Im geregelten bzw. stabilen Zustand ist die PWM-Einrichtung 13 auf die Frequenz fₐ₁ = 50kHz eingestellt und hat anhand des entsprechenden Tastgrades d die Ausgangsspannung U_{An} auf diesen Spannungswert U_{A1} = 10V ausgeregelt.

Da die Feedback-Schleife im Regelkreis des Spannungswandlers 10 in der einfachsten Ausgestaltung nach Art eines Zweipunktreglers nur die beiden binären Extremwertinformationen "Istspannung zu hoch" und "Istspannung zu niedrig" führt, wird die Ausregelung - bei entsprechender Ausgestaltung - zu den zweipunktreglertypischen, vernachlässigbaren Spannungsüber- und Spannungsunterschreitungen des Spannungswerts U_{An} führen.

Wechselt das Auswahlsignal S_{A} aufgrund der Forderung einer Ausgangsspannung U_{A2} von beispielsweise 15 V (U_{A2} = 15V), so schaltet die PWM-Einrichtung 13 auf eine Schalt- oder Arbeitsfrequenz von beispielsweise fₐ₂ = 60kHz um. Die geänderte Arbeitsfrequenz fₐ₂ ist am Abgriff 33 feststellbar und wird über den Koppelkondensator Cₖ ausgekoppelt und passiert den beispielsweise auf eine Frequenz fₐ₂ = 60kHz ausgelegten Bandpass 31. Der ausgangsseitig mit dem Steuereingang des Transistors 32 verbundene Bandpass 31 schaltet daraufhin den Soll-Ist-Vergleicher 20 auf den neuen Sollwert U_{A2} =15V um. Über den Optokoppler 16 wird anhand eines entsprechenden Signalpegels des Steuersignals S_{D} der PWM-Einrichtung 13 solange eine zu niedrige Ausgangsspannung U_{An} gemeldet, bis durch entsprechende Änderung des Tastgrades d des dem Schalttransistor 12 zugeführten PWM-Signals S_{PWM} die Ausgangsspannung U_{An} auf den Spannungs-Sollwert U_{A2} erhöht ist.

Der Transistor 32 der frequenzgesteuerten Sollwertumschaltung 30 wird über den Bandpass 31 durchgeschaltet. Demzufolge wird der Justagewiderstand R3 dem Widerstand R2 des Spannungsteilers R1, R2 parallelgeschaltet mit der Folge, dass sich dessen Teilungsverhältnis ändert und die Spannung am Pluseingang (+) des Operationsverstärkers 21 entsprechend sinkt. Die Feedback-Schleife transportiert solange die Information "Istspannung zu niedrig", bis durch die Erhöhung der Ausgangsspannung U_{An} die Spannung am Pluseingang (+) diejenige am Minuseingang (-) des Operationsverstärkers 21 überschreitet. Solange das Auswahlsignal S_{A} diesen Spannungswert U_{A2} = 15V am Ausgang A₁ des getakteten Spannungswandlers 10 fordert, wird die Ausgangsspannung U_{An} auf diesen Spannungswert U_{A2} ausgeregelt.

Beim Zurückschalten oder Umschalten auf den anderen Spannungswert U_{A1} = 10V mittels des Auswahlsignals S_{A} erzwingt dieses über die PWM-Einrichtung 13 eine Änderung der Schalt- bzw. Arbeitsfrequenz fₐₙ auf die Frequenz fₐ₁ = 50kHz. Demzufolge liefert der Bandpass 31 keine Steuerspannung an den Transistor 32, so dass dieser sperrt. Demzufolge stellt sich am Spannungsteiler R1, R2 des Soll-Ist-Vergleichers 20 das durch den Widerstand R2 bestimmte Teilungsverhältnis ein und die Spannung am Pluseingang (+) des Operationsverstärkers 21 steigt mit der Folge, dass der Signalpegel des Steuersignals S_{R} und demzufolge über den Optokoppler 16 des Steuersignals S_{D} wechselt. Über den Optokoppler 16 wird daher solange eine zu hohe Ausgangsspannung U_{An} gemeldet, bis die PWM-Einrichtung 13 infolge einer Änderung des Tastgrads d des PWM-Signals S_{PWM} des Schalttransistors 12 die geregelte Absenkung der Ausgangsspannung U_{An} auf diesen Spannungswert U_{A1} ermöglicht hat.

Der Referenzwertgeber Z des Soll-Ist-Vergleichers 20 legt den Referenzwert U_{R} des Operationsverstärkers 21 an dessen Minuseingang (-) fest. Dieser Referenzwert bzw. diese Referenzspannung beträgt beispielsweise U_{R} = ½·U_{A1} = 5V. Wenn für die Widerstände R1, R2 und R3 dieselben Widerstandswerte verwendet werden, ergeben sich die hier beispielhaft beschriebenen Spannungswerte U_{A1} = 10V und U_{A2} = 15V.

Bei einer Abweichung des über das Teilungsverhältnis des Spannungsteilers R1, R2 bestimmten Spannungswertes U_{T} am Pluseingang (+) des Operationsverstärkers 21 von dessen Referenzspannung U_{R} wechselt der Signalpegel des ausgangsseitigen Steuersignals S_{R} des Soll-Ist-Vergleichers 20, was zu einem entsprechenden Wechsel des Signalpegels des Steuersignals S_{D} des Optokopplers 15 führt. Infolgedessen ändert die PWM-Einrichtung 13 den Tastgrad d des Signals S_{PWM} für den Schalttransistor 12, mit der Wirkung, dass die Ausgangsspannung U_{An} ausgeregelt wird.

Mittels des im Ausführungsbeispiel auf eine Frequenz von fₐ₂ = 60kHz eingestellten Bandpasses 31 der frequenzgesteuerten Sollwertumschaltung 30 kann vom hiermit beschalteten getakteten Spannungswandlers 10 zwischen den beiden von der Arbeitsfrequenz fₐₙ des Spannungswandlers 10 abhängigen Zuständen fₐ₂ = 60kHz und fₐₙ ≠ 60kHz unterschieden werden.

Da die Arbeitsfrequenz fₐₙ des Spannungswandlers 10 und damit die Schaltfrequenz des mittels des PWM-Signals S_{PWM} angesteuerten Schalttransistors 12 im Bereich der technischen Daten der verwendeten Bauteile in einem vergleichsweise großen Frequenzbereich wählbar ist, können auch weitere Spannungswerte der Ausgangsspannung U_{An} des Spannungswandlers 10 weiteren Schaltfrequenzen durch Hinzufügen weiterer frequenzgesteuerter Sollwertumschaltungen 30a, 30b zugeordnet werden.

FIG 2 zeigt eine modifizierte bzw. erweiterte frequenzgesteuerte Sollwertumschaltung 30a des oder für den getakteten Spannungswandler 10. Die frequenzgesteuerte Sollwertumschaltung 30a umfasst hierzu wiederum einen ersten Frequenzfilter bzw. Bandpass 31a mit ausgangsseitig nachgeschaltetem Schalter in Form eines Transistors 32. Dieser ist analog zu FIG 1 kollektorseitig über den Widerstand R3 an den Ausgang A₃ und emitterseitig über den Ausgang A4 an ausgangsseitige Masse oder Ausgangsbezugspotential A_{B} geführt. Insoweit entspricht die frequenzgesteuerte Sollwertumschaltung 30a derjenigen aus FIG 1.

Für eine weitere Ausgangsspannung U_{An} sind ein weiterer Bandpass 33a sowie ein weiterer Transistor 32a vorgesehen, der kollektorseitig wiederum über einen ohmschen Widerstand (Justagewiderstand) R3a ebenfalls an den Ausgangs A3 und emitterseitig ebenfalls an den Masseausgang A₄ geführt ist. Die Frequenz fₐ₃ des Bandpasses 33a beträgt beispielsweise 70kHz (fₐ₃ = 70kHz) und der zugeordnete Spannungs-Sollwert ist beispielsweise U_{A3} = 20V.

Die beiden Bandpässe 31a und 33a sind ausgangsseitig zudem jeweils mit einem gegen Masse geführten Kondensator C_{S1} bzw. C_{S2} beschaltet. Eingangsseitig sind die beiden Bandpässe 31a und 33a gemeinsam über den Koppelkondensator Cₖ an den Eingang E₂ der frequenzgesteuerten Sollwertumschaltung 30 geführt. Während die Widerstandswerte der ohmschen Widerstände R1 bis R3 für den ersten und zweiten Spannungswert U_{A1} = 10V und U_{A2} = 15V der Ausgangsspannung U_{An} gleich sind (R1 = R2 = R3), ist der Widerstandswert des Widerstands R₃ₐ mit R3a = ½ R2 bestimmt.

Je nach mittels des Auswahlsignals S_{A} vorgegebenem Spannungswert der Ausgangsspannung U_{An} ändert die PWM-Einrichtung 13 die Arbeitsfrequenz fₐₙ, die sich ausgangs- bzw. primärseitig widerspiegelt und mittels des Koppelkondensators Cₖ am Abgriff 33 ausgekoppelt und den Bandpässen 31a, 33a zugeführt wird. Je nach Arbeitsfrequenz fₐₙ, die nicht die unbeeinflusste Frequenz ist (fₐₙ ≠ 50kHz), erzeugt entweder der Bandpass 31a oder der Bandpass 33a eine Ausgangsspannung, die den zugeordneten Transistor 32 oder 32a durchsteuert, so dass der entsprechende Justierwiderstand R3 bzw. R3a über den Ausgang A₃ dem Widerstand R2 des Spannungsteilers R1, R2 parallelgeschaltet wird. Aufgrund der unterschiedlichen Widerstandswerte der Widerstände R3 und R3a stellt sich ein entsprechendes Teilungsverhältnis des Spannungsteilers R1, R2 und damit eine entsprechende Spannung U_{T} am Pluseingang (+) des Operationsverstärkers 21 ein. Dies führt wiederum zu einer Änderung des Signalpegels des Regelsignals S_{R} und über den Optokoppler 16 des Steuersignals S_{D} mit der Folge, dass durch entsprechende Änderung des Tastgrades d über die PWM-Einrichtung 13 die Ausgangsspannung U_{An} auf den durch die Umschaltung neu vorgegebenen Spannungs-Sollwert geregelt wird.

Um die Regelung zu beschleunigen bzw. die Einstellung des getakteten Spannungswandlers 10 auf den infolge der Umschaltung neu festgelegten Spannungs-Sollwert zeitlich zu verkürzen, kann vorteilhafterweise eine Vorsteuerung der PWM-Einrichtung 13 derart erfolgen, dass mit der Initiierung der Umschaltung durch das Auswahlsignal S_{A} auf einen anderen Spannungs-Sollwert U_{An} der Tastgrad d des PWM-Signals S_{PWM} für den Schalttransistor 12 bereits in die entsprechende Richtung geändert wird. Hierzu wird für eine vorgegebene Zeitspanne vom Regelbetrieb in einen vom Steuersignal S_{D} der Feedback-Schleife unabhängigen Steuerbetrieb umgeschaltet oder dem Regelbetrieb ein entsprechender Vorsteuerbetrieb überlagert. Als Zeitspanne wird dabei vorzugsweise der zeitliche Abstand zwischen der durch das Auswahlsignal S_{A} initiierten Änderung der Arbeitsfrequenz fₐₙ und einem Wechsel des Signalpegels des Steuersignals S_{D} gewählt. Diese Zeitdauer hängt von den schaltungstechnischen Verzögerungen in der Feedback-Schleife, insbesondere derer im jeweiligen Bandpass 31, 31a, 33a und im Soll-Ist-Vergleicher 20 sowie im Optokoppler 16, ab. Ist diese Zeitspanne beendet, so wird vom Steuer- oder Vorsteuerbetrieb erneut auf den Regelbetrieb zurückgeschaltet. Hierdurch erfolgt der Umschaltvorgang insgesamt innerhalb einer vergleichsweise kurzen Zeit.

Durch die Zuordnung der Speicherkondensatoren C_{S1} und C_{S2} zu den Bandpässen 31a bzw. 33a ist mittels der frequenzgesteuerten Sollwertumschaltung 30a zusätzlich zur Frequenzumschaltung auch eine Frequenzmodulation ermöglicht bzw. realisiert. Hierzu sind die beiden Bandpässe 31a und 33a beispielsweise auf eine Frequenz fₐ₄ = 48kHz bzw. fₐ₅ = 52kHz eingestellt.

Nachfolgend sei davon ausgegangen, dass analog zum vorliegenden Ausführungsbeispiel durch entsprechende Auswahl mittels des Auswahlsignals S_{A} der Spannungs-Sollwert U_{A1} = 10V mit zugeordneter Arbeitsfrequenz fₐ₁ = 50kHz ausgewählt und die Ausgangsspannung U_{An} hierauf ausgeregelt ist. Infolgedessen sind weder der Transistor 32 noch der Transistor 32a der frequenzgesteuerten Sollwertumschaltung 30a durchgeschaltet bzw. aktiviert. Infolge einer (statischen) Umschaltung auf die Arbeitsfrequenz fₐ₄ = 48kHz ist aufgrund entsprechender Ansteuerung durch den Bandpass 31a der Transistor 32 durchgeschaltet und aktiviert. Dies hat eine Umschaltung auf den Spannungs-Sollwert U_{A2} = 15V und eine entsprechende Ausregelung der Ausgangsspannung U_{An} zur Folge.

Analog ist infolge einer Umschaltung auf die Arbeitsfrequenz fₐ₅ = 52kHz der Transistor 32a über den Bandpass 33a aktiviert, was eine Umschaltung auf einen Spannungs-Sollwert U_{A3} = 20V zur Folge hat. Infolge einer Frequenzmodulation, d.h. einer ständig wechselnden Arbeitsfrequenz zwischen fₐ₄ = 48kHz und fₐ₅ = 52kHz, sind aufgrund der Speicherkondensatoren C_{S1} und C_{S2} die Transistoren 32 und 32a zeitgleich aktiviert, was einen Spannungs-Sollwert U_{A4} = 25V zur Folge hat. Die zeitgleiche Aktivierung der Transistoren 32 und 32a bewirkt einen kombinierten Justagewiderstand, der vorliegend der Parallelschaltung der Widerstände R3 und R3a entspricht.

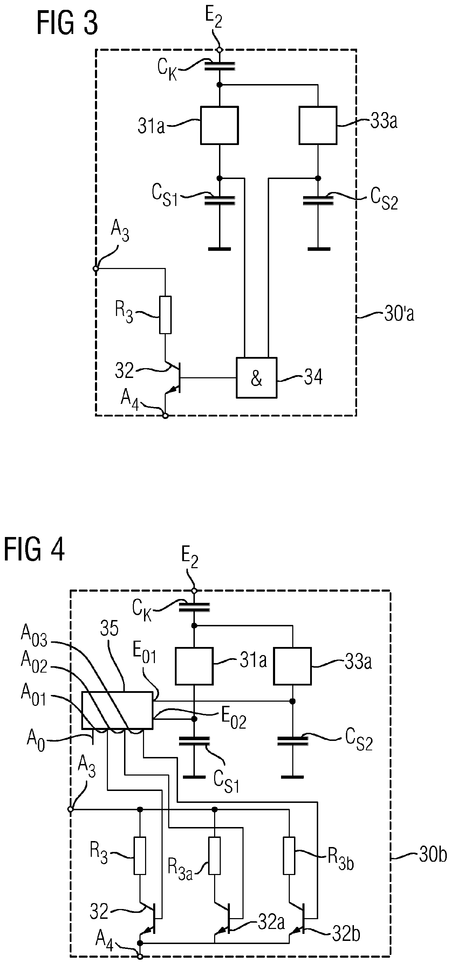

Bei der Schaltungsvariante gemäß FIG 2 ist die UND-Verknüpfung als sogenanntes "wired-AND" realisiert, um eine weitere Ausgangsspannung U_{An} zu erzielen. Eine alternative Ausführungsform für zwei Ausgangsspannungen U_{An} zeigt FIG 3 mit einem logischen UND-Gatter 34. Bei dieser Variante wird lediglich der Transistor 32 mit zugeordnetem Widerstand R3 benötigt. Die Speicherkondensatoren C_{S1} und C_{S2} stellen sicher, dass die UND-Verknüpfung bei einer ständig wechselnden Arbeitsfrequenz zwischen fₐ₄ = 48kHz und fₐ₅ = 52kHz erfüllt wird. Sobald mittels des Auswahlsignals S_{A} die Arbeitsfrequenz auf statisch 50kHz oder aufgrund eines Defekts oder einer Störung in der PWM-Einrichtung 13 statisch auf 48kHz oder 52kHz verharrt, ist die UND-Verknüpfung nicht mehr erfüllt und der Transistor 32 sperrt, so dass die niedrigere der beiden Ausgangsspannungen U_{An} abgegeben wird. Insofern hat die Schaltungsvariante gemäß FIG 3 sogenannte fail-safe-Eigenschaften, da verschiedenste Defekte zur Abgabe der niedrigsten Ausgangsspannung U_{An} führen.

FIG 4 zeigt eine Schaltungsvariante 30b der frequenzgesteuerten Sollwertumschaltung, die im Zuge einer Frequenzmodulation - im Gegensatz zur Schaltungsvariante 30a - auch eine freie Wählbarkeit der vierten Ausgangsspannung U_{An} ermöglicht. Hierzu ist ein logisches Gatter in Form eines 1-aus-4-Dekoders 35 vorgesehen. Bei Auswahl des Spannungs-Schwellwertes U_{A1} = 10V und damit einer Arbeitsfrequenz fₐ₁ = 50kHz ist keiner der Bandpässe 31a und 33a durchlässig, der nicht beschaltete Ausgang A₀ des Dekoders 35 ist aktiviert und der Spannungswandler 10 regelt die Ausgangsspannung U_{An} auf den Spannungs-Sollwert U_{A1} = 10V.

Infolge einer durch das entsprechende Auswahlsignal S_{A} initiierten Umschaltung auf die Arbeitsfrequenz fₐ₄ = 48kHz ist der Bandpass 31a durchlässig und der Ausgang A₀₁ des Dekoders 35 und damit der Transistor 32 mit der Folge aktiviert, dass eine Umschaltung auf den Spannungs-Sollwert U_{A2} = 15V und eine entsprechende Regelung der Ausgangsspannung U_{An} auf diesen Spannungs-Sollwert erfolgt.

Eine Umschaltung auf die Arbeitsfrequenz fₐ₅ = 52kHz aktiviert über den durchlässigen Bandpass 33a den Ausgang A₀₂ des Dekoders 35 und demzufolge den Transistor 32a, so dass auf den Spannungssollwert U_{A3} = 20V umgeschaltet und die Ausgangsspannung U_{An} des Spannungswandlers 10 hierauf ausgeregelt wird.

Im Zuge einer Frequenzmodulation sind aufgrund der Speicherkondensatoren C_{S1} und C_{S2} sowohl dessen Eingang E₀₁, mit dem der Bandpass 31a ausgangsseitig verbunden ist, also auch dessen Eingang E₀₂, mit dem der Bandpass 33a ausgangsseitig verbunden ist, und infolgedessen auch ein weiterer Ausgang A₀₃ des Dekoders 35 sowie demzufolge wiederum ein weiterer Schalter oder Transistor 32b aktiviert. Dieser ist wiederum kollektorseitig über einen Justagewiderstand R3b mit dem Ausgang A₃ und emitterseitig mit dem Masseausgang A₄ der frequenzgesteuerten Sollwertumschaltung 30b verbunden. Mittels des Widerstandes R3b kann die Ausgangsspannung U_{An} des Spannungswandlers 10 im Falle der Frequenzmodulation unabhängig von den Widerständen R3 und R3a bzw. deren Parallelschaltung gewählt werden.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

So können mit einem weiteren Bandpass, dessen Mitten- der Bandpassfrequenz fₐₙ = 56kHz beträgt, mit zugeordnetem Speicherkondensator C_{Sn} und einem weiteren Schalter oder Transistor 32n sowie einem weiteren Justagewiderstand R3n mittels statischer Umschaltung und mittels Frequenzmodulation weitere Ausgangsspannungen U_{An} generiert werden. Wird eine solche Schaltungsvariante mit einem beispielsweise 1-aus-8-Dekoder und zusätzlichen Schaltern bzw. Transistoren sowie Justagewiderständen ergänzt, können infolge entsprechender Umschaltung eine weitere Ausgangsspannung U_{An} und mittels Frequenzmodulation weitere frei wählbare Ausgangsspannungen U_{An} realisiert werden. Konsequenterweise können mittels eines 1-ausn-Dekoders und entsprechender Schaltungsausführung auch komplexere Strukturen realisiert werden.

Weiterhin ist die beschriebene Einwirkung der frequenzgesteuerten Sollwertumschaltung 30 auf den Soll-Ist-Vergleicher 20 über Justagewiderstände nur eine beispielhafte Darstellung einer technischen Möglichkeit. Eine Variante besteht in der Verwendung von ebenso vielen Soll-Ist-Vergleichern, wie Ausgangsspannungen wählbar sein sollen. Die Schalter oder Transistoren 32, 32a, 32b der frequenzgesteuerten Sollwertumschaltung sind dann zwischen die Soll-Ist-Vergleicher 20 und dem Optokoppler 16 platziert und schalten jeweils einen Soll-Ist-Vergleicher 20 auf den Optokoppler 16 durch.

Des Weiteren können der Soll-Ist-Vergleicher 20 und der frequenzgesteuerte Sollwertumschalter 30 derart integriert werden, dass ein direkter Anschluss an den Optokoppler 16 ermöglicht ist. Ferner können mittels einer integrierten Schaltung, die die Pulsweitenmodulation und die Frequenzumschaltung realisiert, über den Optokoppler 16 auch Steuersignale S_{D} mit vergleichsweise hoher Informationsrate bzw. ausführlicheren Telegrammen realisiert werden, so dass das Steuersignal S_{D} nicht auf binäre Zustände beschränkt ist.

Beispielhaft könnte die ausgangsseitige integrierte Schaltung über den Optokoppler 16 der eingangsseitigen integrierten Schaltung auch Telegramme mit den Inhalten "Arbeitsfrequenz 60kHz detektiert", "Sollspannung jetzt 15V", "Istspannung zu niedrig" usw. senden. Bei entsprechender Ausgestaltung bzw. Programmierung könnte die eingangsseitige integrierte Schaltung zusätzlich zu den beschriebenen funktionalen Abläufen die Folgerichtigkeit und Plausibilität dieser Telegramme überprüfen und bei einer Abweichung die Abgabe einer Ausgangsspannung beenden oder zumindest zeitweise unterbrechen, um die fehlerhafte Abgabe einer zu hohen Ausgangsspannung zu vermeiden.

Weiterhin könnte beispielsweise durch Hinzufügung von Gegenkopplungswiderständen R_{g} und Rₐ (FIG 1) zum Differenz- oder Operationsverstärker 21 der Soll-Ist-Vergleicher 20 entsprechend erweitert werden, so dass zusätzlich zu den binären Extremwertinformationen "Istspannung zu hoch" und "Istspannung zu niedrig" auch ein Bereich analoger Abhängigkeit zwischen einer Sollwertabweichung und einem Foto- oder Transistorstrom im Optokoppler 16 realisiert wird.

Zudem sind die genannten Spannungs-Sollwerte U_{An} bzw. Ausgangsspannungen nur beispielhaft. So können auch Spannungs-Sollwerte mit beispielsweise 10V, 14V, 18V oder 22V realisiert werden. Jeder dieser Spannungs-Sollwerte ist dann einer Arbeitsfrequenz fₐₙ mit 50kHz, 55kHz, 60kHz bzw. 65kHz des Spannungswandlers 10 zugeordnet, die von der ausgangsseitigen, frequenzgesteuerten Sollwertumschaltung 30 identifiziert und insbesondere differenziert werden kann.

Der erfindungsgemäße Spannungswandler 10 weist somit mindestens zwei stabile Arbeitspunkte auf. Um einen bestimmten Arbeitspunkt auszuwählen, wird eine zugeordnete Arbeitsfrequenz fₐₙ verwendet, die selbst nicht an der Regelung der Ausgangsspannung U_{An} beteiligt ist. Da erkanntermaßen am Spannungswandler 10 ausgangsseitig die jeweilige Arbeitsfrequenz fₐₙ feststellbar ist, kann jeweils ein einziger zugeordneter Soll-Ist-Vergleicher 20 die jeweils eingestellte Ausgangsspannung U_{An} bewerten und eine Ausregelung über den Optokoppler 16 hinweg durch die PWM-Einrichtung 13 bewirken. Da in der Grundform des Spannungswandlers 10 nach Art eines Zweipunktreglers nur die beiden Extremwertinformationen "Istspannung zu hoch/niedrig" übertragen werden müssen, können preisgünstige, weit tolerierte Optokoppler 16 verwendet werden.

Ein Aspekt der Erfindung ist es, eine Umschaltung zwischen einer festen Frequenz und einer modulierten Frequenz anstelle einer Frequenzumschaltung zwischen zwei Frequenzen zu verwenden. Beispielsweise könnte unter Berücksichtigung einer festen Zuordnung einer Arbeitsfrequenz fₐₙ zu einer Ausgangsspannung bzw. einem Spannungs-Sollwert U_{An} eine angeforderte Sollwertumschaltung dazu führen, dass der getaktete Spannungswandler 10 eingangsseitig die Arbeitsfrequenz fₐₙ im Mittel weiterhin auf der festen Frequenz belässt, jedoch andauernd oder über einen bestimmten Zeitraum eine Frequenzmodulation zwischen zwei benachbarten Frequenzen durchführt.

Auch ein solches Frequenzverhalten ist am getakteten Spannungswandler 10 ausgangsseitig mit geringem technischem Aufwand feststellbar, so dass die frequenzgesteuerte Sollwertumschaltung auf den geforderten Spannungs-Sollwert und damit auf die geforderte Ausgangsspannung U_{An} umschaltet.

Ferner kann der oder jeder Schalter oder Transistor 32, 32a, 32b durch einen MOSFET oder einen Analogschalter realisiert sein. Auch kann der Optokoppler 16 durch ein anderes galvanisch trennendes Element wie Lichtleitkabel, Übertrager, Piezokoppler, Akustikkoppler usw. ersetzt werden.

## Patentansprüche

1. Getakteter Spannungswandler (10) mit galvanischer Trennung mittels eines Transformators (11) und mit geregelter Einstellung einer Ausgangsspannung(U_{An}) aus einer Eingangsspannung (U_{E}) auf einen aus einer Anzahl von Sollwerten (U_{A1}=10V, U_{A2}=15V, U_{A3}=20V, U_{A4}=25V) vorgebbaren Sollwert sowie mit eingangsseitig mindestens einem mittels einer PWM-Einrichtung (13) gesteuerten Halbleiterschalter (12) und mit ausgangsseitig mindestens einem Gleichrichter (14),
mit einer Regelung und/oder Steuerung mit mindestens einem Soll-Ist-Vergleicher (20)
**gekennzeichnet durch** eine frequenzgesteuerten Sollwertumschaltung (30, 30a, 30'a, 30b), die in Abhängigkeit von einer Umschaltung einer einstellbaren Arbeitsfrequenz (fₐₙ) der PWM-Einrichtung (13) von einer ersten Frequenz (fₐ₁=50kHz), der ein erster (U_{A1}=10V) der Sollwerte zugeordnet ist, auf eine zweite Frequenz (fₐ₂=60kHz), der ein aktuell ausgewählter zweiter (U_{A2}=15V) der Sollwerte zugeordnet ist, ein Teilungsverhältnis eines mit der eingestellten Ausgangsspannung (U_{An}) beaufschlagten Spannungsteilers umschaltet, wobei der Soll-Ist-Vergleicher (20) aus einer Abweichung eines von dem Teilungsverhältnis bestimmten Spannungswertes (U_{T}) von einem Referenzwert (U_{R}) einer Referenzspannung ein Steuersignal (S_{R}) generiert, das über ein galvanisch trennendes Element (16) geführt und der PWM-Einrichtung (13) zur Regelung der Ausgangsspannung (U_{An}) auf den der aktuell eingestellten Frequenz (fₐ₂=60kHz) der PWM-Einrichtung zugeordneten Sollwert (U_{A2}=15V) zugeführt wird.

2. Spannungswandler (10) nach Anspruch 1,
**dadurch gekennzeichnet, dass**
der Soll-Ist-Vergleicher (20) der frequenzgesteuerten Sollwertumschaltung (30, 30a, 30'a, 30b) nachgeschaltet ist und das Steuersignal (S_{R}) zur Regelung der Ausgangsspannung (U_{An}) auf den von der jeweiligen Frequenz (fₐ₁=50kHz, fₐ₂=60kHz, fₐ₃=70kHz) der Arbeitsfrequenz (fₐₙ) abhängigen Sollwert (U_{A1}=10V, U_{A2}=15V, U_{A3}=20V) ausgibt.

3. Spannungswandler (10) nach Anspruch 1 oder 2,
d**adurch gekennzeichnet,** dass
das galvanisch trennende Element für das die Abweichung repräsentierende Steuersignal (S_{R}) ein Optokoppler (16) ist.

4. Spannungswandler (10) nach einem der Ansprüche 1 bis 3,
**dadurch gekennzeichnet, dass**
die frequenzgesteuerte Sollwertumschaltung (30, 30a, 30'a, 30b) mindestens einen Frequenzfilter (31, 31a, 33a), insbesondere mindestens einen Bandpass, umfasst, der anhand von Spannungssprüngen, Spannungsänderungen oder Wechselspannungsanteilen (U_{AC}) der Ausgangsspannung (U_{An}), der Spannung an einem Zwischenabgriff einer ausgangsseitigen Wicklung des Transformators oder der Spannung an einer Hilfswicklung des Transformators die Umschaltung des Teilungsverhältnisses und damit die Regelung der Ausgangsspannung (U_{An}) vom ersten Sollwert (U_{A1}=10V) auf den zweiten Sollwert (U_{A2}=15V) oder umgekehrt initiiert, wobei die Spannungssprünge, Spannungsänderungen oder Wechselspannungsanteile (U_{AC}) die jeweilige Frequenz (fₐ₁=50kHz, fₐ₂=60kHz) der Arbeitsfrequenz (fₐₙ) der PWM-Einrichtung (13) repräsentieren.

5. Spannungswandler (10) nach einem der Ansprüche 1 bis 4,
**dadurch gekennzeichnet, dass**
die frequenzgesteuerte Sollwertumschaltung (30, 30a, 30'a, 30b) eingangsseitig an einen Abgriff (33) zwischen dem Transformator (11) und dem Gleichrichter (14) angebunden ist.

6. Spannungswandler (10) nach Anspruch 4 oder 5,
**dadurch gekennzeichnet, dass**
der Frequenzfilter (31, 31a, 33a) ausgangsseitig einen steuerbaren Schalter (32, 32a, 32b), insbesondere einen Transistor, in Abhängigkeit von der jeweils abgegriffenen Frequenz (fₐ₁=50kHz, fₐ₂=60kHz, fₐ₃=70kHz) der Arbeitsfrequenz (fₐₙ) derart steuert, dass die Regelung bzw. Steuerung die Ausgangsspannung (U_{An}) auf den der jeweils aktuell ausgewählten Frequenz (fₐ₁=50kHz, fₐ₂=60kHz, fₐ₃=70kHz) der Arbeitsfrequenz (fₐₙ) zugeordneten Sollwert (U_{A1}=10V, U_{A2}=15V, U_{A3}=20V) einstellt.

7. Spannungswandler (10) nach Anspruch 6,
**dadurch gekennzeichnet, dass**
der steuerbare Schalter (32, 32a, 32b) mit einem Widerstand (R3, R3a, R3b) eine Änderung des Teilungsverhältnisses des Spannungsteilers (R1, R2) innerhalb des Soll-Ist-Vergleichers (20) bewirkt.

8. Spannungswandler (10) nach einem der Ansprüche 4 bis 7,
**dadurch gekennzeichnet, dass** mindestens zwei Frequenzfilter (31a, 33a), insbesondere Bandpässe, derart miteinander verknüpft sind, dass einem aktuell ausgewählten Arbeitsfrequenzwechsel bzw. einer Arbeitsfrequenzmodulation (fₐ₄=48kHz, fₐ₅=52kHz) zugeordneter Sollwert (U_{A4}=25V) verwendet wird.

9. Spannungswandler (10) nach Anspruch 8,
**dadurch gekennzeichnet, dass**
den Frequenzfiltern (31a, 33a) ausgangsseitig jeweils ein Verzögerungsglied oder Speicherelement, insbesondere ein Kondensator (C_{S1}, C_{S2}), nachgeschaltet ist, wobei die die beteiligten Frequenzen (fₐ₄=48kHz, fₐ₅=52kHz) der Arbeitsfrequenz repräsentierenden Ausgangssignale der Frequenzfilter (31a, 33a) bei Arbeitsfrequenzmodulation gleichzeitig zu Verfügung stehen.

10. Spannungswandler (10) nach einem der Ansprüche 1 bis 9,
**dadurch gekennzeichnet, dass**
die frequenzgesteuerte Sollwertumschaltung (30, 30a, 30'a, 30b) sowohl für eine Arbeitsfrequenzumschaltung als auch für eine Arbeitsfrequenzmodulation vorgesehen und eingerichtet ist.

11. Spannungswandler (10) nach Anspruch 10,
**gekennzeichnet durch**
eine Anzahl von Frequenzfiltern (31, 31a, 33a), insbesondere Bandpässe, sowie einen mit diesen verbundenen, insbesondere digitalen, Dekoder (35) zur Einstellung von festen Frequenzen (fₐ₁=50kHz, fₐ₄=48kHz, fₐ₅=52kHz) der Arbeitsfrequenz (fₐₙ) zugeordneten Sollwerten (U_{A1}=10V, U_{A2}=15V, U_{A3}=20V) und/oder zur Einstellung von fortgesetzten Arbeitsfrequenzwechseln bzw. Arbeitsfrequenzmodulationen (fₐ₄=48kHz, fₐ₅=52kHz) zugeordneten Sollwerten.

12. Spannungswandler (10) nach einem der Ansprüche 1 bis 11,
**dadurch gekennzeichnet, dass**
der Soll-Ist-Vergleicher (20) einen Operations- oder Differenzverstärker (21) umfasst, dem eingangsseitig der Referenzwert (U_{R}) der Referenzspannung und der mittels der frequenzgesteuerten Sollwertumschaltung (30, 30a, 30'a, 30b) von der Ausgangsspannung (U_{An}) abgeleiteter, insbesondere veränderbarer Spannungswert (U_{T}) zugeführt ist, wobei der Operations- oder Differenzverstärker (21) ausgangsseitig das Steuersignal (S_{R}, S_{D}) ausgibt, dessen Signalwert oder -pegel von der Abweichung des Spannungswertes (U_{T}) vom Referenzwert (U_{R}) der Referenzspannung abhängig ist.

13. Spannungswandler (10) nach einem der Ansprüche 1 bis 12,
**dadurch gekennzeichnet, dass**
das über das galvanisch trennende Element (16) geführte Steuersignal (S_{R}, S_{D}) zusätzlich zu den die Abweichung repräsentierenden Informationen auch Informationen über den Schaltzustand der frequenzgesteuerten Sollwertumschaltung (30, 30a, 30'a, 30b) transportiert.

14. Spannungswandler (10) nach einem der Ansprüche 1 bis 13,
**dadurch gekennzeichnet, dass**
die PWM-Einrichtung (13) im Falle eines Umstellens des Auswahlsignals (S_{A}) an einem Steuereingang (E₄) für eine vorgegebene Zeitspanne von einem vom Rückmeldesignal (S_{D}) abhängigen Regelbetrieb in einen vom Rückmeldesignal (S_{D}) unabhängigen Steuerbetrieb umschaltet oder dem Regelbetrieb einen Vorsteuerbetrieb überlagert und die vorgegebene Zeitspanne mindestens aus den Signallaufzeiten der frequenzgesteuerten Sollwertumschaltung (30, 30a, 30'a, 30b), des Soll-Ist-Vergleichers (20) und des Optokopplers (16) aufsummiert ist.

## Claims

1. Switched voltage converter (10) having galvanic isolation by means of a transformer (11) and having closed-loop control adjustment of an output voltage (U_{An}) from an input voltage (U_{E}) to a setpoint value predefinable to one of a number of setpoint values (U_{A1}=10V, U_{A2}=15V, U_{A3}=20V, U_{A4}=25V) and having at least one semiconductor switch (12) controlled by a PWM device (13) on the input side, and having at least one rectifier (14) on the output side, having a closed-loop and/or open-loop controller with at least one setpoint/actual value comparator (20), **characterised by** a frequency-controlled setpoint value changeover means (30, 30a, 30'a, 30b), which as a function of a changeover of an adjustable operating frequency (fₐₙ) of the PWM device (13) from a first frequency (fₐ₁=50kHz), which is associated with a first (U_{A1}=10V) of the setpoint values, to a second frequency (fₐ₂=60kHz), which is associated with a currently selected second (U_{A2}=15V) of the setpoint values, changes over a division ratio of a voltage divider to which the set output voltage (U_{An}) is applied, wherein the setpoint/actual value comparator (20) generates a control signal (S_{R}) from a deviation of a voltage value (U_{T}), determined from the division ratio, from a reference value (U_{R}) of a reference voltage, said control signal (S_{R}) being guided via a galvanically isolating element (16) and supplied to the PWM device (13) for closed-loop control adjustment of the output voltage (U_{An}) to the setpoint value (U_{A2}=15V) associated with the currently set frequency (fₐ₂=60kHz) of the PWM device.

2. Voltage converter (10) according to claim 1,
**characterised in that**
the setpoint/actual value comparator (20) is connected downstream of the frequency-controlled setpoint value changeover means (30, 30a, 30'a, 30b) and outputs the control signal (S_{R}) for closed-loop control adjustment of the output voltage (U_{An}) to the setpoint value (U_{A1}=10V, U_{A2}=15V, U_{A3}=20V) dependent on the respective frequency (fₐ₁=50kHz, fₐ₂=60kHz, fₐ₃=70kHz) of the operating frequency (fₐₙ)

3. Voltage converter (10) according to claim 1 or 2,
**characterised in that**
the galvanically isolating element for the control signal (S_{R}) representing the deviation is an optocoupler (16).

4. Voltage converter (10) according to one of claims 1 to 3,
**characterised in that**
the frequency-controlled setpoint value changeover means (30, 30a, 30'a, 30b) comprises at least one frequency filter (31, 31a, 33a), in particular at least one bandpass, which, based on voltage jumps, voltage changes or AC voltage components (U_{AC}) of the output voltage (U_{An}) , the voltage at an intermediate tap of an output-side winding of the transformer or the voltage at an auxiliary winding of the transformer, initiates the changeover of the division ratio and thus the closed-loop control adjustment of the output voltage (U_{An}) from the first setpoint value (U_{A1}=10V) to the second setpoint value (U_{A2}=15V) or vice versa, wherein the voltage jumps, voltage changes or AC voltage components (U_{AC}) represent the respective frequency (fₐ₁=50kHz, fₐ₂=60kHz) of the operating frequency (fₐₙ) of the PWM device (13).

5. Voltage converter (10) according to one of claims 1 to 4,
**characterised in that**
the frequency-controlled setpoint value changeover means (30, 30a, 30'a, 30b) is connected on the input side to a tap (33) between the transformer (11) and the rectifier (14) .

6. Voltage converter (10) according to claim 4 or 5,
**characterised in that**
the frequency filter (31, 31a, 33a) on the output side controls a controllable switch (32, 32a, 32b), in particular a transistor, as a function of the respectively tapped frequency (fₐ₁=50kHz, fₐ₂=60kHz, fₐ₃=70kHz) of the operating frequency (fₐₙ) such that the closed-loop or open-loop controller sets the output voltage (U_{An}) to the setpoint value (U_{A1}=10V, U_{A2}=15V, U_{A3}=20V) associated with the currently selected frequency (fₐ₁=50kHz, fₐ₂=60kHz, fₐ₃=70kHz) of the operating frequency (fₐₙ) .

7. Voltage converter (10) according to claim 6,
**characterised in that**
the controllable switch (32, 32a, 32b), with a resistor (R3, R3a, R3b), causes a change in the division ratio of the voltage divider (R1, R2) inside the setpoint/actual value comparator (20).

8. Voltage converter (10) according to one of claims 4 to 7,
**characterised in that**
at least two frequency filters (31a, 33a), in particular bandpass filters, are linked to one another such that a setpoint value (U_{A4}=25V) associated with a currently selected operating frequency change or an operating frequency modulation (fₐ₄=48kHz, fₐ₅=52kHz) is used.

9. Voltage converter (10) according to claim 8,
**characterised in that**
a delay element or memory element, in particular a capacitor (C_{S1}, C_{S2}), is connected downstream of the frequency filters (31a, 33a), on the output side in each case, wherein the output signals of the frequency filters (31a, 33a) representing the frequencies (fₐ₄=48kHz, fₐ₅=52kHz) in question of the operating frequency are simultaneously available during operating frequency modulation.

10. Voltage converter (10) according to one of claims 1 to 9,
**characterised in that**
the frequency-controlled setpoint value changeover means (30, 30a, 30'a, 30b) is provided and designed both for an operating frequency changeover and also for an operating frequency modulation.

11. Voltage converter (10) according to claim 10,
**characterised by**
a number of frequency filters (31, 31a, 33a), in particular bandpass filters, and an in particular digital decoder (35) connected thereto for adjusting setpoint values (U_{A1}=10V, U_{A2}=15V, U_{A3}=20V) associated with fixed frequencies (fₐ₁=50Hz, fₐ₄=48kHz, fₐ₅=52kHz) of the operating frequency (fₐₙ) and/or for adjusting setpoint values associated with continued operating frequency changes or operating frequency modulations (fₐ₄=48kHz, fₐ₅=52kHz)

12. Voltage converter (10) according to one of claims 1 to 11,
**characterised in that**
the setpoint/actual value comparator (20) comprises an operational or difference amplifier (21), to which is supplied on the output side the reference value (U_{R}) of the reference voltage and the in particular variable voltage value (U_{T}) derived from the output voltage (U_{An}) by means of the frequency-controlled setpoint value changeover means (30, 30a, 30'a, 30b), wherein on the output side the operational or difference amplifier (21) outputs the control signal (S_{R}, S_{D}), the signal value or level of which depends on the deviation of the voltage value (U_{T}) from the reference value (U_{R}) of the reference voltage.

13. Voltage converter (10) according to one of claims 1 to 12,
**characterised in that**
the control signal (S_{R}, S_{D}) guided via the galvanically isolating element (16) also transports, in addition to the information representing the deviation, information about the switching state of the frequency-controlled setpoint value changeover means (30, 30a, 30'a, 30b).

14. Voltage converter (10) according to one of claims 1 to 13,
**characterised in that**
the PWM device (13) switches, in the case of a conversion of the selection signal (S_{A}) at a control input (E₄) for a predetermined period, from a closed-loop control mode dependent on the feedback signal (S_{D}) to an open-loop control mode not dependent on the feedback signal (S_{D}) or superimposes a pre-control mode on the closed-loop control mode and the predefined period is the sum at least of the signal propagation times of the frequency-controlled setpoint value changeover means (30, 30a, 30'a, 30b), of the setpoint/actual value comparator (20) and of the optocoupler (16).

## Revendications

1. Convertisseur (10) de tension à découpage à séparation galvanique au moyen d'un transformateur (11) et à réglage régulé d'une tension (U_{An}) de sortie à partir d'une tension (U_{E}) d'entrée sur une valeur de consigne pouvant être prescrite dans un certain nombre de valeurs (U_{A1}=10V, U_{A2}=15V, U_{A3}=20V, U_{A4}=25V) de consigne, ainsi qu'à interrupteur (12) à semi-conducteur du côté de l'entrée commandé au moyen d'un dispositif (13) à modulation d'impulsion en largeur et à au moins un redresseur (14) du côté de la sortie,
comprenant une régulation et/ou une commande ayant au moins un comparateur (20) consigne-réel,
**caractérisé par** un premier changeur (30, 30a, 30'a, 30b) de valeurs de consigne commandé en fréquence, qui, en fonction d'une commutation d'une fréquence (fₐₙ) de travail réglable du dispositif (13) de modulation d'impulsion en largeur d'une première fréquence (fₐ₁=50KHz), qui est associée à une première (U_{A1}=10V) des valeurs de consigne, à une deuxième fréquence (fₐ₂=60KHz), qui est associée à une deuxième (U_{A2}=15V) sélectionnée présentement des valeurs de consigne, change un rapport de division d'un diviseur de tension alimenté en la tension (U_{An}) de sortie réglée, le comparateur (20) consigne-réel produisant, à partir d'un écart entre une valeur (U_{T}) de tension définie par le rapport de division à une valeur (U_{R}) de référence d'une tension de référence, un signal (S_{R}) de commande, qui est conduit par un élément (16) de séparation galvanique et est envoyé au dispositif (13) à modulation d'impulsion en largeur pour réguler la tension (U_{An}) de sortie à la valeur (U_{A2}=15V) de consigne associée à la fréquence (fₐ₂=60KHz) réglée présentement du dispositif à modulation d'impulsion en largeur.

2. Convertisseur (10) de tension suivant la revendication 1,
**caractérisé en ce que**
le comparateur (20) consigne-réel est monté en aval du changeur (30, 30a, 30'a, 30b) de valeurs de consigne commandé en fréquence et émet le signal (S_{R}) de commande pour régler la tension (U_{An}) de sortie à la valeur (U_{A1}=10V, U_{A2}=15V, U_{A3}=20V) de consigne dépendant de la fréquence (fₐ₁=50KHz, fₐ₂=60KHz, fₐ₃=70KHz) respective de la fréquence (fₐₙ) de travail.

3. Convertisseur (10) de tension suivant la revendication 1 ou 2,
**caractérisé en ce que**
l'élément de séparation galvanique pour le signal (S_{R}) de commande représentant l'écart est un optocoupleur (16).

4. Convertisseur (10) de tension suivant l'une des revendications 1 à 3,
**caractérisé en ce que**
le changeur (30, 30a, 30'a, 30b) de valeurs de consigne commandé en fréquence comprend au moins un filtre (31, 31a, 33a) de fréquence, notamment au moins un passe-bande, qui, à l'aide de sauts de tension, de variations de tension ou de parties (U_{AC}) de tension alternative de la tension (U_{An}) de sortie de la tension sur une prise intermédiaire d'un enroulement du côté de la sortie du transformateur ou de la tension sur un enroulement auxiliaire du transformateur, fait débuter le changement du rapport de division et ainsi la régulation de la tension (U_{An}) de sortie de la première valeur (U_{A1}=10V) de consigne à la deuxième valeur (U_{A2}=15V) de consigne ou inversement, les sauts de tension, les variations de tension ou les parties (U_{AC}) de tension alternative représentant la fréquence (Fₐ₁=50KHz, fₐ₂=60KHz) respective de la fréquence (fₐₙ) de travail du dispositif (13) à modulation d'impulsion en largeur.

5. Convertisseur (10) de tension suivant l'une des revendications 1 à 4,
**caractérisé en ce que**
le changeur (30, 30a, 30'a, 30b) de valeurs de consigne commandé en fréquence est relié, du côté de l'entrée, à une prise (33) entre le transformateur (11) et le redresseur (14).

6. Convertisseur (10) de tension suivant la revendication 4 ou 5,
**caractérisé en ce que**
le filtre (31, 31a, 33a) de fréquence commande, du côté de l'entrée, l'interrupteur (32, 32a, 32b) pouvant être commandé, notamment un transistor, en fonction de la fréquence (Fₐ₁=50KHz, fₐ₂=60KHz, fₐ₃=70KHz) prélevée de la fréquence (fₐₙ) de travail, de manière à ce que la régulation ou la commande règle la tension (U_{An}) de sortie sur la valeur (U_{A1}=10V, U_{A2}=15V, U_{A3}=20V) de consigne associée à la fréquence (Fₐ₁=50KHz, fₐ₂=60KHz, fₐ₃=70KHz) respective sélectionnée présentement de la fréquence (fₐₙ) de travail.

7. Convertisseur (10) de tension suivant la revendication 6, **caractérisé en ce que**
l'interrupteur (32, 32a, 32b) pouvant être commandé provoque, par une résistance (R3, R3a, R3b), une variation du rapport de division du diviseur (R1, R2) de tension dans le comparateur (20) consigne-réel.

8. Convertisseur (10) de tension suivant l'une des revendications 4 à 7,
**caractérisé en ce que**
au moins deux filtres (31a, 33a) de fréquence, notamment des passe-bande, sont combinés de manière à utiliser une valeur (U_{A4}=25V) de consigne associée à un changement de fréquence de travail sélectionné présentement ou à une modulation (fₐ₄=48KHz, fₐ₅=52KHz) de fréquence de travail.

9. Convertisseur (10) de tension suivant la revendication 8,
**caractérisé en ce que**
en aval des filtres (31a, 33a) de fréquence, est monté, du côté de la sortie, respectivement, un élément de retard ou un élément d'accumulation, notamment un condensateur (C_{S1}, C_{S2}), les signaux de sortie, représentant les fréquences (fₐ₄=48KHz, fₐ₅=52KHz) concernées de la fréquence de travail, étant mis à disposition des filtres (31a, 33a) de fréquence en même temps, lors de la modulation de la fréquence de travail.

10. Convertisseur (10) de tension suivant l'une des revendications 1 à 9,
**caractérisé en ce que**
le changeur (30, 30a, 30'a, 30b) de valeurs de consigne commandé en fréquence est prévu et conçu à la fois pour un changement de la fréquence de travail et pour une modulation de la fréquence de travail.

11. Convertisseur (10) de tension suivant la revendication 10,
**caractérisé par**
un nombre de filtres (31, 31a, 33a) de fréquence, notamment de passe-bande, ainsi qu'un décodeur (35), notamment numérique, relié à ceux-ci pour régler des valeurs (U_{A1}=10V, U_{A2}=15V, U_{A3}=20V) de consigne associées à des fréquences (fₐ₁=50KHz, fₐ₄=48KHz, fₐ₅=52KHz) fixes de la fréquence (f_{An}) de travail et/ou pour régler des valeurs de consigne associées à des changements de la fréquence de travail ou à des modulations de la fréquence de travail en cours.

12. Convertisseur (10) de tension suivant l'une des revendications 1 à 11,
**caractérisé en ce que**
le comparateur (20) consigne-réel comprend un amplificateur (21) opérationnel ou différentiel, auquel est envoyée, du côté de l'entrée, la valeur (U_{R}) de référence de la tension de référence et la valeur (U_{T}) de tension, notamment variable, déduite de la tension (U_{An}) de sortie au moyen du changeur (30, 30a, 30'a, 30b) de valeurs de consigne commandé en fréquence, l'amplificateur (31) opérationnel ou différentiel émettant, du côté de la sortie, le signal (S_{R}, S_{D}) de commande, dont la valeur ou le niveau dépend de l'écart entre la valeur (U_{T}) de tension et la valeur (U_{R}) de référence de la tension de référence.

13. Convertisseur (10) de tension suivant l'une des revendications 1 à 12,
**caractérisé en ce que**
le signal (S_{R}, S_{D}) de commande, conduit par l'intermédiaire de l'élément (16) de séparation galvanique, transporte, supplémentairement aux informations représentant l'écart, également des informations sur l'état de changement du changeur (30, 30a, 30'a, 30b) de valeurs de consigne commandé en fréquence.

14. Convertisseur (10) de tension suivant l'une des revendications 1 à 13,
**caractérisé en ce que**
le dispositif (13) à modulation d'impulsion en largeur passe, dans le cas d'un changement du signal (S_{A}) de sélection sur une entrée (E₄) de commande, d'un fonctionnement de régulation, qui dépend d'un signal (S_{D}) de retour, à un fonctionnement de commande indépendant du signal (S_{D}) de retour ou superpose, au fonctionnement de régulation, un fonctionnement pilote et le laps de temps donné à l'avance est constitué de la somme d'au moins les temps de signal du changeur (30, 30a, 30'a, 30b) de valeurs de consigne commandé en fréquence, du comparateur (20) consigne-réel et de l'optocoupleur (16).
